# EUROPÄISCHE PATENTSCHRIFT

(11) **EP 3 763 953 B1**
(45) Veröffentlichungstag und Bekanntmachung des Hinweises auf die Patenterteilung: **28.06.2023**
(21) Anmeldenummer: 20183834.9
(22) Anmeldetag: 02.07.2020
(51) Int. Cl.: F16B 37/08, F16B 37/02, F16L 3/10

(54) **MUTTER UND ROHRSCHELLE MIT DIESER MUTTER**
NUT AND PIPE CLAMP WITH THIS NUT
ÉCROU ET COLLIER DE SERRAGE DOTÉ D'UN TEL ÉCROU

(30) Priorität: 11.07.2019 DE 102019118837
(43) Veröffentlichungstag der Anmeldung: 13.01.2021
(73) Patentinhaber: Sinn, Edgar Emil, 56587 Strassenhaus (DE)
(72) Erfinder: Sinn, Edgar Emil, 56587 Strassenhaus (DE)
(74) Vertreter: Schrooten, Rolf

(56) Entgegenhaltungen:
- EP-A1- 1 022 502
- DE-U1- 29 712 804
- US-A- 2 397 251

## Beschreibung

Die vorliegende Erfindung betrifft eine Mutter zum Befestigen auf einer Schraube oder einer Gewindestange nach dem Oberbegriff von Anspruch 1. Die Mutter hat eine Schraubenaufnahme mit einer Gewindebohrung zur Aufnahme der Schraube und mindestens einen die Mutterwand der Schraubenaufnahme durchtrennenden Schlitz, der die Schraubenaufnahme in mindestens zwei Bereiche unterteilt. Diese Bereiche der Schraubenaufnahme umfassen mehrere Gewinderillen, insbesondere drei oder vier Gewinderillen, und sind an nach innen federnden Haltebügeln angeordnet, welche in einen von der Schraubenaufnahme entfernten Verbindungsbereich bei einstückiger Ausführung ineinander übergehen oder im Falle einer mehrstückigen Ausführung miteinander verbunden sind. Dabei sind die Haltebügel derart geformt, dass ein mittels der Mutter zu verbindendes bzw. zu befestigendes Werkstück, insbesondere ein Ende einer Rohrschelle, von außen derart umgriffen werden kann, dass die Bereiche der Schraubenaufnahme auseinander gedrückt werden können, wobei der Durchmesser der Gewindebohrung der Mutter bei einem vom Außengewinde der Schraube und/oder vom Innengewinde der Schraubenaufnahme erzeugten radialen Druck so weit vergrößert wird, dass der axiale Halt zwischen der Mutter und der Schraube zeitweise nicht mehr gegeben ist.

Dennoch bietet die Mutter in vorteilhafter Weise eine hohe Festigkeit bzw. große Haltekräfte dadurch, dass die Bereiche der Schraubenaufnahme jeweils mehrere, vorzugsweise drei bis vier Gewinderillen umfassen, so dass die Schraubenaufnahme insgesamt mit mehreren, vorzugsweise drei bis vier Gewindegängen ausgeführt ist und dadurch große Haltekräfte einer eingesetzten Schraube oder Gewindestange erlaubt.

Es sind die verschiedensten Arten von Muttern bekannt. Werden diese auf eine längere Schraube oder auf einer Gewindestange aufgeschraubt, so benötigt das Drehen der Schraube über eine größere Länge der Gewindestange viel Zeit.

Um diese Zeit zu verkürzen wurde in der EP 0 908 637 B1 sowie in der DE 297 18 042 U1 eine Mutter gemäß der eingangs genannten Art vorgeschlagen. Diese Mutter ermöglicht bei leichter Handhabbarkeit eine einfache und vor allem schnelle Befestigung der Mutter auch über einen großen Längsbereich einer Schraube bzw. einer Gewindestange lediglich durch Aufbringen einer axialen Druckkraft und ohne eine Eindrehbewegung der Schraube. Derartige Muttern sind auch aus der EP 1 022 502 A1 und aus der DE 297 12 804 U1 bekannt.

Ferner ist aus der DE 298 23 094 U1 oder auch aus der US 2 397 251 A eine Klemmmutter mit einem durch einen Schlitz durchtrennten und auf diese Weise in zwei Bereiche unterteilten Presslochgewinde bekannt. Jeder Bereich des Presslochgewindes ist an einem Ende von zwei sich gegenüberstehenden federnden Zungen eines Blechstreifens eingepresst, so dass die Klemmmutter bei axialem Druck auf eine Schraube ein leichtes axiales Durchrutschen der Schraube in dem Presslochgewinde erlaubt. Dabei besteht der Gewindegang des Presslochgewindes lediglich aus den beiden jeweils halbrund ausgestanzten Enden eines Blechstreifens, welche sich zu dem eingestanzten Presslochgewinde hin nach innen verjüngen, so dass sich insgesamt nur eine sehr geringe Gewindehöhe mit noch nicht einmal einem vollständigen Gewindegang ergibt. Mit einer derartigen Klemmmutter können daher die beispielsweise zur Befestigung einer Rohrschelle erforderlichen Festigkeiten bzw. Haltekräfte nicht immer in einem ausreichenden Maße erreicht werden, so dass sie insbesondere nicht im Schwerlastbereich angewendet werden kann.

Allerdings benötigt das Lösen der Schraubverbindung auch bei diesen Muttern noch eine relativ lange Zeit. Da das Aufbringen einer axialen Zugkraft den Durchmesser der Gewindebohrung der Mutter nicht vergrößert, muss die Schraube oder Gewindestange hierzu in herkömmlicher Weise aus der Schraubenaufnahme herausgedreht werden, was insbesondere bei größeren Längen der Schraube oder Gewindestange aufwendig ist und entsprechend lagen dauert.

Aufgabe der vorliegenden Erfindung ist es daher, eine konstruktiv einfache, preiswert herzustellende und leicht handhabbare Mutter der eingangs genannten Art zu schaffen, die bei großer Stabilität nicht nur eine schnelle und einfache Befestigung der Mutter, sondern auch ein schnelles und einfaches Lösen der Mutter ermöglicht.

Diese Aufgabe wird erfindungsgemäß durch eine Mutter nach Anspruch 1 gelöst. Vorteilhafte Ausgestaltungen und zweckmäßige Weiterbildungen der Erfindung ergeben sich aus den abhängigen Ansprüchen.

Die erfindungsgemäßen Lösung sieht vor, dass an den Bereichen der Schraubenaufnahme und/oder an den Haltebügeln auf beiden Seiten des Schlitzes jeweils ein Öffnungselement angeordnet ist, und dass zwischen den Öffnungselementen ein Zwischenraum ausgebildet ist, der sich bezogen auf die Längsachse einer in der Gewindebohrung aufnehmbaren Schraube bzw. Gewindestange, welche eine axiale Richtung definiert, radial nach außen erweitert. Dabei sind die beiden Öffnungselemente jeweils in der Form eines flachen Stegs ausgebildet, dessen in der axialen Richtung betrachtete Höhe gleich der Höhe der beiderseits des Schlitzes liegenden Bereiche der Schraubenaufnahme ist.

Wesentlich ist es dabei, dass sich der Zwischenraum zumindest in einem äußeren Bereich mit zunehmender Entfernung von der Schraubenaufnahme in radialer Richtung weiter öffnet.

Der Hauptvorteil liegt dabei darin, dass ein Werkzeug, etwa ein Schraubenzieher besonders einfach in den zwischen den stegförmigen Öffnungselementen ausgebildeten Zwischenraum eingesteckt werden kann, um so die auf beiden Seiten des Schlitzes liegenden Bereiche der Schraubenaufnahme leicht auseinander zu drücken, so dass der axiale Halt zwischen der Mutter und der Schraube aufgehoben ist und die Schraube oder Gewindestange ohne Ausführung einer Drehbewegung leicht und schnell aus der Schraubenaufnahme herausgezogen werden kann. Aufgrund der großen axialen Höhe der stegförmigen Öffnungselemente kann ein Verdrehen des in den Zwischenraum eingesteckten Werkzeugs um einen Winkel von bis zu 90° das Auseinanderdrücken der Bereiche der Schraubenaufnahme herbeiführen, vergrößern und/oder arretieren, so dass das Herausziehen der Schraube oder Gewindestange leicht und schnell ausgeführt werden kann. Dabei kann dieses zeitsparende Öffnen der erfindungsgemäßen Mutter im Gegensatz zu bekannten Ausführungen von Klemmmuttern, bei denen der einzige Gewindegang der eingepressten Schraubenaufnahme lediglich aus zwei einander zugewandten halbrund ausgestanzten Enden eines Blechstreifens besteht, mehrfach wiederholt und ohne Zerstörung oder Beschädigung der Mutter ausgeführt werden.

Auf diese konstruktiv besonders einfache Weise wird eine Mutter geschaffen, die nicht nur ein schnelles und einfaches Befestigen, sondern ebenso auch ein besonders schnelles und einfaches Lösen der Schraubverbindung gestattet. Gleichzeitig erlauben dabei die beiderseits des Schlitzes in axialer Richtung relativ hoch ausgeführten Bereiche der Schraubenaufnahme die Ausbildung mehrerer Gewindegänge, so dass von einer eingesetzten Schraube auch große Haltekräfte aufgebracht werden können und eine besonders stabile Ausführung der Mutter erzielt wird, die bei der Anwendung an einer Rohrschelle auch den Einsatz im Schwerlastbereich erlaubt. Da die beiden sich beiderseits des Schlitzes über die gleiche axiale Höhe erstreckenden Öffnungselemente jeweils in der Form eines flachen Stegs ausgebildet sind, kann das Gewicht der Mutter insgesamt relativ gering gehalten werden.

Eine besonders einfache Ausführungsform der Mutter kann erreicht werden, wenn die Öffnungselemente einstückig an jeweils einen Bereich der Schraubenaufnahme angeformt sind.

Zusätzlich oder alternativ dazu können die Öffnungselemente auch einstückig an jeweils einen Haltebügel der Bereiche der Schraubenaufnahme angeformt sein.

Ein besonders leichtes Einstecken eines Werkzeugs in den Zwischenraum kann dadurch erreicht werden, dass die Öffnungselemente sich radial soweit nach außen erstrecken, dass ihr von der Schraubenaufnahme entferntes Ende seitlich über die Längsseite der Haltebügel hinausragt.

Gemäß einer ersten Ausführungsform der Erfindung kann der Zwischenraum zumindest abschnittsweise durch geradlinige Bereiche der Öffnungselemente begrenzt sein.

Dabei ist es für ein leichtes Einstecken eines Werkzeugs in den Zwischenraum besonders vorteilhaft, wenn die geradlinigen Bereiche der Öffnungselemente in einem Winkel zueinander verlaufen, der zwischen 30° und 120°, vorzugsweise zwischen 45° und 100° und insbesondere zwischen 60° und 90° liegt.

Gemäß einer alternativen Ausführungsform der Erfindung kann der Zwischenraum zumindest abschnittsweise auch durch gebogene bzw. gekrümmte Bereiche der Öffnungselemente begrenzt sein. Dabei ist auch eine Kombination von geradlinigen und gekrümmten Bereichen der Öffnungselemente möglich.

Nach einer besonders bevorzugten Ausführungsform der Erfindung liegen die in der Form eines flachen Stegs ausgebildeten Öffnungselemente in einem an den jeweiligen Bereich der Schraubenaufnahme angrenzenden Abschnitt zunächst aneinander an, wobei der zwischen den Öffnungselementen ausgebildete und sich in radialer Richtung nach außen erweiternde Zwischenraum sich erst radial außerhalb dieser Abschnitte anschließt. In axialer Richtung betrachtet können die Öffnungselemente dabei vorzugsweise eine Y-förmige Struktur ausbilden.

Die vorliegende Erfindung betrifft außerdem eine Rohrschelle, die mit einer Mutter der vorangehend beschriebenen Art versehen ist. Dabei umfasst die Rohrschelle einen Schellenkörper, der zwei in etwa radial nach außen weisende Spannflansche aufweist, welche durch eine in die Mutter eingesetzte Spannschraube zusammengespannt werden können. Bei der erfindungsgemäßen Ausführungsform kann die Rohrschelle durch axiales Eindrücken der Schraube besonders schnell geschlossen und durch Einstecken eines Werkzeugs in den zwischen den Öffnungselementen liegenden Zwischenraum auch besonders schnell geöffnet werden.

Weitere Vorteile und Merkmale der Erfindung ergeben sich aus der nachfolgenden Beschreibung und den in den Zeichnungen dargestellten Ausführungsbeispielen. Es zeigen:
- Figur 1:: perspektivische Ansicht einer Rohrschelle mit einer Mutter nach dem Stand der Technik,
- Figur 2:: perspektivische Ansicht der Rohrschelle aus Figur 1 in mit einem darin festgespannten Rohr,
- Figur 3:: Schnittansicht einer Mutter nach dem Stand der Technik mit einer darin eingesetzten Schraube,
- Figur 4:: perspektivische Ansicht einer erfindungsgemäßen Mutter,
- Figur 5:: Seitenansicht der Mutter aus Figur 4, und
- Figur 6:: Draufsicht der Mutter aus Figur 4.

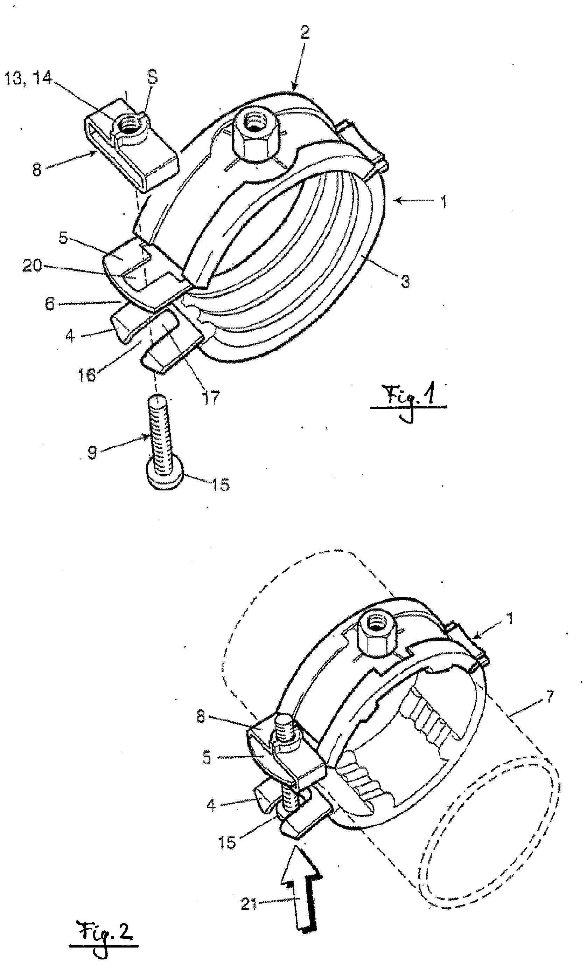

In Figur 1 ist mit 1 eine Rohrschelle bezeichnet, die einen an sich bekannten ringförmigen Schellenkörper 2 und eine die Innenseite des Schellenkörpers abdeckende elastische Gummieinlage 3 umfasst. Der Schellenkörper 2 ist bei dem dargestellten Ausführungsbeispiel zweiteilig ausgebildet und setzt sich aus zwei halbrunden Bügeln zusammen, die scharnierartig mittels einer Steckverbindung in an sich bekannter Weise miteinander verbunden sind.

Sowohl das erste Ende 4 als auch das zweite Ende 5 des Schellenkörpers 2 sind nach außen gerichtet und begrenzen eine Öffnung 6, durch welche hindurch das jeweils zu befestigende und in Figur 2 gestrichelt angedeutete Rohr 7 eingeführt wird, und die mittels einer in eine Mutter 8 einschraubbaren Spannschraube 9 verschließbar ist.

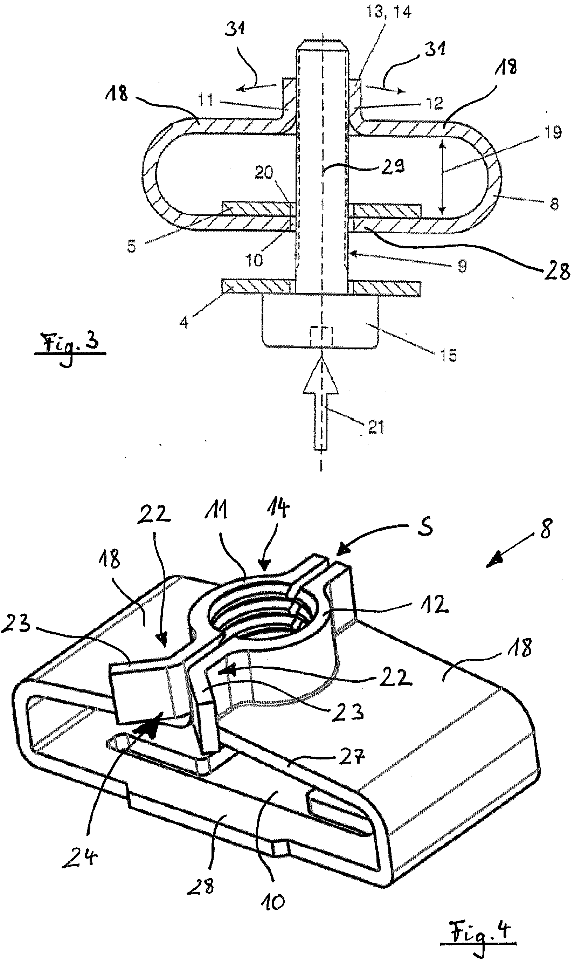

Die Mutter 8 ist im Querschnitt (Figur 3) ringförmig ausgebildet und besteht aus Federstahl. Sie weist auf ihrer dem ersten Ende 4 des Schellenkörpers 2 zugewandten Seite eine Durchlassöffnung 10 für die Spannschraube 9 auf. Auf ihrer der ersten Seite 4 des Schellenkörpers abgewandten Seite sind die beiden Enden der Mutter 8 hochgebogen und bilden jeweils zur Hälfte den Gewindehals 13 einer mit mehreren Gewindegängen ausgeführten Schraubenaufnahme 14. Die beiden Bereiche 11 und 12 der Schraubenaufnahme 14 sind durch einen Schlitz S voneinander getrennt, so dass die Mutter 8 im Bereich der Schraubenaufnahme 14 geteilt ausgebildet ist. Jeder Bereich 11 und 12 der Schraubenaufnahme 14 befindet sich so am Ende eines federnden Haltebügels 18. Die beiden Haltebügel 18 sind hier einstückig ausgeführt und gehen in einem Verbindungsbereich 28 ineinander über, welcher im Bereich der Durchlassöffnung 10 ausgebildet ist.

Durch die Teilung der Schraubenaufnahme 14 wird erreicht, dass die beiden Bereiche 11 und 12 der Schraubenaufnahme 14 bei einem (in den Figuren 2 und 3 durch den Pfeil 21 angedeuteten) axialen Druck auf den Schraubenkopf 15 der Spannschraube 9 federnd auseinandergebogen werden und ein axiales Durchrutschen der Spannschraube 9 erlauben. Der Durchmesser der Gewindebohrung im Gewindehals 13 der Schraubenaufnahme 14 der Mutter 8 ist dabei so weit vergrößert, dass der axiale Halt zwischen allen Gewindegängen der Mutter 8 und der Schraube 9 während des Aufbringens des axialen Drucks auf die Schraube 9 nicht mehr gegeben ist.

Im Folgenden wird das Spannen der Rohrschelle 1 kurz erläutert:
Zunächst werden die beiden halbrunden Bügel der Rohrschelle in an sich bekannter Weise um das Rohr 7 herumgeklappt. Anschließend wird zur Vormontage der Rohrschelle 1 die Spannschraube 9, die bereits in die an dem zweiten Ende 5 des Schellenkörpers 2 angeordnete Mutter 8 eingeschraubt ist, über einen Einschnitt 16 (Figur 1) in eine Ausnehmung 17 des ersten Endes 4 des Schellenkörpers 2 gedrückt. Um dabei eine möglichst schnelle Vormontage der Rohrschelle 1 zu erreichen, müssen sowohl der Abstand 19 (Figur 3) zwischen den - in Richtung der Spannschraube 9 gesehen - gegenüberliegenden inneren Oberflächen der ringförmigen Mutter 8, als auch die Ausnehmung 20 in dem zweiten Ende 5 des Schellenkörpers 2 eine vorgebbare Beweglichkeit (d.h. ein seitliches Verkanten) der Spannschraube 9 zulassen.

Nach der Vormontage der Rohrschelle 1 erfolgt das eigentliche Spannen der Rohrschelle durch einen in Längsrichtung des Schraubenschafts ausgeführten axialen Druck mit einer vorgebbaren Kraft auf den Schraubenkopf 15 in Richtung des in Figur 3 mit 21 bezeichneten Richtungspfeils. Dabei werden die Bereiche 11 und 12 der Schraubenaufnahme 14 der Mutter 8 federnd auseinandergedrückt (Pfeile 31 in Figur 3). Sobald die Druckkraft nachlässt, legen sich die Gewinderillen der beiden Bereiche 11 und 12 wieder um das Gewinde der Spannschraube 9 und verrasten diese, so dass die Schraube 9 in ihrer jeweiligen Lage in den Gewindegängen der Schraubenaufnahme 14 fixiert bleibt.

Sofern erforderlich, kann ein Nachspannen der Rohrschelle 1 durch ein weiteres Eindrehen der Spannschraube 9 mittels eines Schraubenziehers erfolgen.

Bei der in den Figuren 4 bis 6 dargestellten erfindungsgemäßen Mutter 8 ist an jedem Bereich 11 und 12 der Schraubenaufnahme 14 jeweils ein Öffnungselement 22 angeformt, so dass sich auf beiden Seiten des Schlitzes S jeweils ein Öffnungselement 22 befindet. In dem hier dargestellten Ausführungsbeispiel setzt sich der Schlitz S zwischen den beiden Öffnungselementen 22 fort, so dass hier ein Zwischenraum 24 ausgebildet ist. Dabei erstreckt sich der zwischen den beiden stegförmigen Öffnungselementen 22 ausgebildete Zwischenraum 24 in einer radialen Richtung, wobei er sich radial nach außen erweitert. Auf diese Weise bildet der Zwischenraum 24 an seinem äußeren Ende eine sich über die gesamte Höhe der Bereiche 11 und 12 der Schraubenaufnahme 14 erstreckende Einführschräge 25, die das Einstecken eines hier nicht zeichnerisch dargestellten Werkzeugs wie der Spitze eines Schraubenziehers erleichtert.

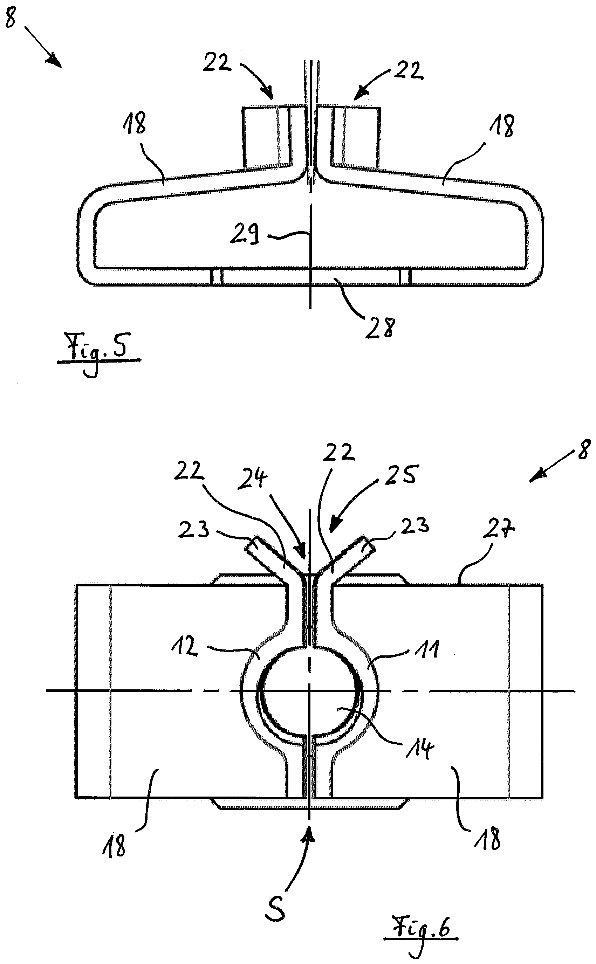

Die beiden Öffnungselemente 22 sind dabei jeweils in der Form eines flachen Steges ausgeführt, dessen Höhe der Höhe des Gewindehalses 13 der Schraubenaufnahme 14 entspricht. In der Draufsicht (Figur 6) ergibt sich so in etwa die Form eines "Y", dessen nach außen weisende Arme 23 einen Winkel von annähernd 90° zwischen sich einschließen. Vorteilhafterweise ragen die Arme 24 dabei seitlich über die Längsseite 27 der Haltebügel 18 hinaus.

Durch aufgrund der sich nach außen erweiternden Ausbildung des Zwischenraums 24 kann ein Werkzeug wie ein Schraubenzieher besonders einfach zwischen die beiden Öffnungselemente 22 eingesteckt werden, wodurch die auf den beiden Seiten des Schlitzes S liegenden Bereiche 11 und 12 der Schraubenaufnahme 14 unter elastischer Verformung der Haltebügel 18 leicht auseinander gedrückt werden können. Wie beim Eindrücken der Schraube 9 wird auf hierdurch der axiale Halt zwischen den Gewindegängen der Mutter 8 und der Schraube 9 aufgehoben, so dass die Schraube 9 ohne Ausführung einer Drehbewegung schnell und einfach aus dem Gewindehals 13 der Schraubenaufnahme 14 herausgezogen werden kann.

Das Spannen der Rohrschelle 1 erfolgt dabei auch bei der erfindungsgemäßen Mutter 8 so wie auch bei der in den Figuren 1 und 2 gezeigten bekannten Ausführungsform durch axialen Druck (Pfeil 21) auf den Schraubenkopf 15. Die axiale Richtung ist dabei in der vorliegenden Anmeldung durch die in Figur 3 eingezeichnete Längsachse 29 der Schraube 9 definiert, während eine radiale Richtung senkrecht hierzu verläuft.

## Patentansprüche

1. Mutter (8) zum Befestigen auf einer Schraube (9), wobei die Mutter (8) eine Schraubenaufnahme (14) mit einer Gewindebohrung zur Aufnahme der Schraube (9) und mindestens einen die Mutterwand der Schraubenaufnahme (14) durchtrennenden Schlitz (S) aufweist, der die Schraubenaufnahme (14) in mindestens zwei Bereiche (11, 12) unterteilt,
wobei die Bereiche (11, 12) der Schraubenaufnahme (14) mehrere Gewinderillen, insbesondere drei oder vier Gewinderillen, umfassen,
und wobei die Bereiche (11, 12) der Schraubenaufnahme (14) an nach innen federnden Haltebügeln (18) angeordnet sind, die in einen von der Schraubenaufnahme (14) entfernten Verbindungsbereich (28) miteinander verbunden und derart geformt sind, dass ein mittels der Mutter (8) zu verbindendes oder zu befestigendes Werkstück oder ein Ende (5) einer Rohrschelle (1) von außen derart umgreifbar ist, dass die Bereiche (11, 12) der Schraubenaufnahme (14) auseinanderdrückbar sind, wobei der Durchmesser der Gewindebohrung der Mutter (8) bei einem vom Außen- und/oder Innengewinde erzeugten radialen Druck so weit vergrößerbar ist, dass der axiale Halt zwischen Mutter (8) und Schraube (9) zeitweise nicht mehr gegeben ist,
**dadurch gekennzeichnet,**
**dass** an den Bereichen (11, 12) der Schraubenaufnahme (14) und/oder an den Haltebügeln (18) auf beiden Seiten des Schlitzes (S) jeweils ein Öffnungselement (22) angeordnet ist, die jeweils in der Form eines flachen Stegs ausgebildet sind, wobei die in Richtung der Längsachse einer Schraube (9) betrachtete Höhe der Öffnungselemente (22) der Höhe der Bereiche (11, 12) der Schraubenaufnahme (14) entspricht, und wobei zwischen den Öffnungselementen (22) ein Zwischenraum (24) ausgebildet ist, der sich bezogen auf die Schraubenaufnahme (14) in radialer Richtung nach außen erweitert.

2. Mutter (8) nach Anspruch 1, **dadurch gekennzeichnet, dass** die Öffnungselemente (22) einstückig an jeweils einen Bereich (11, 12) der Schraubenaufnahme (14) angeformt sind.

3. Mutter (8) nach Anspruch 1 oder 2, **dadurch gekennzeichnet, dass** die Öffnungselemente (22) einstückig an jeweils einen Haltebügel (18) der Bereiche (11, 12) der Schraubenaufnahme (14) angeformt sind.

4. Mutter (8) nach einem der vorherigen Ansprüche, **dadurch gekennzeichnet, dass** ein von der Schraubenaufnahme (14) entfernter Bereich der Öffnungselemente (22) seitlich über die Haltebügel (18) hinausragt.

5. Mutter (8) nach einem der vorherigen Ansprüche, **dadurch gekennzeichnet, dass** der Zwischenraum (24) zumindest teilweise durch geradlinige Bereiche (23) der Öffnungselemente (22) begrenzt ist.

6. Mutter (8) nach Anspruch 5, **dadurch gekennzeichnet, dass** die geradlinigen Bereiche (23) der Öffnungselemente (22) zwischen sich einen Winkel einschließen, der zwischen 30° und 120°, vorzugsweise zwischen 45° und 100° und insbesondere zwischen 60° und 90° liegt.

7. Mutter (8) nach einem der vorherigen Ansprüche, **dadurch gekennzeichnet, dass** der Zwischenraum (24) zumindest teilweise durch gekrümmte Bereiche der Öffnungselemente (22) begrenzt ist.

8. Mutter (8) nach einem der vorherigen Ansprüche, **dadurch gekennzeichnet, dass** die in der Form eines flachen Stegs ausgebildeten Öffnungselemente (22) jeweils in einem an die Bereiche (11, 12) der Schraubenaufnahme (14) angrenzenden Abschnitt aneinander anliegen, wobei der zwischen den Öffnungselementen (22) ausgebildete und sich in radialer Richtung nach außen erweiternde Zwischenraum (24) radial außerhalb dieser Abschnitte ausgebildet ist.

9. Rohrschelle (1) mit einer Mutter (8) und mit einem Schellenkörper (2), der zwei in etwa radial nach außen stehende Spannflansche (4, 5) aufweist, welche durch eine in die Mutter (8) einsetzbare Spannschraube (9) zusammenspannbar sind, **dadurch gekennzeichnet, dass** die Mutter (8) der Rohrschelle (1) die Merkmale von einem der Ansprüche 1 bis 8 aufweist.

## Claims

1. A nut (8) for fastening on a screw (9), wherein the nut (8) has a screw intake (14) with a threaded hole for receiving the screw (9) and at least one slot (S) which cuts through the nut wall of the screw intake (14) and divides the screw intake (14) into at least two regions (11, 12),
wherein the regions (11, 12) of the screw intake (14) comprise a plurality of thread grooves, in particular three or four thread grooves,
and wherein the regions (11, 12) of the screw intake (14) are arranged on inwardly resilient retaining brackets (18) which are connected to one another in a connecting region (28) remote from the screw intake (14) and are shaped in such a manner that a workpiece to be connected or fastened by means of the nut (8) or an end (5) of a pipe clamp (1) can be encompassed from the outside in such a manner that the regions (11, 12) of the screw intake (14) can be pressed apart, wherein in the case of a radial pressure generated by the external and/or internal thread, the diameter of the threaded hole of the nut (8) can be enlarged to such an extent that the axial hold between nut (8) and screw (9) is temporarily no longer given,
**characterized in**
**that** on both sides of the slot (S) on the regions (11, 12) of the screw intake (14) and/or on the holding brackets (18), an opening element (22) is arranged in each case, which are in each case formed in the shape of a flat web, wherein the height of the opening elements (22) as viewed in the direction of the longitudinal axis of a screw (9) corresponds to the height of the regions (11, 12) of the screw intake (14), and wherein an intermediate space (24), which widens outwardly in the radial direction relative to the screw intake (14), is formed between the opening elements (22).

2. The nut (8) according to claim 1, **characterized in that** the opening elements (22) are integrally molded in each case on a region (11, 12) of the screw intake (14).

3. The nut (8) according to claim 1 or 2, **characterized in that** the opening elements (22) are integrally molded in each case on a retaining bracket (18) of the regions (11, 12) of the screw intake (14).

4. The nut (8) according to any one of the preceding claims, **characterized in that** a region of the opening elements (22) remote from the screw intake (14) projects laterally beyond the retaining brackets (18).

5. The nut (8) according to any one of the preceding claims, **characterized in that** the intermediate space (24) is at least partially delimited by rectilinear regions (23) of the opening elements (22).

6. The nut (8) according to claim 5, **characterized in that** the rectilinear regions (23) of the opening elements (22) enclose between them an angle which is between 30° and 120°, preferably between 45° and 100° and in particular between 60° and 90°.

7. The nut (8) according to any one of the preceding claims, **characterized in that** the intermediate space (24) is at least partially delimited by curved regions of the opening elements (22).

8. The nut (8) according to any one of the preceding claims, **characterized in that** the opening elements (22), which are formed in the shape of a flat web, rests against one another in each case in a section adjacent to the regions (11, 12) of the screw intake (14), wherein the intermediate space (24) formed between the opening elements (22) and widening outwards in the radial direction is formed radially outside these sections.

9. A pipe clamp (1) with a nut (8) and with a clamp body (2) which has two clamping flanges (4, 5) which project approximately radially outwards and can be clamped together by a clamping screw (9) which can be inserted into the nut (8),
**characterized in that** the nut (8) of the pipe clamp (1) has the features according to any one of claims 1 to 8.

## Revendications

1. Écrou (8), destiné à être fixé sur une vis (9), l'écrou (8) comportant un logement de vis (14), pourvu d'un taraudage, destiné à recevoir la vis (9), et au moins une fente (S) sectionnant la paroi d'écrou du logement de vis (14), qui divise le logement de vis (14) en au moins deux zones (11, 12),
les zones (11, 12) du logement de vis (14) comportant plusieurs gorges de filet, notamment trois ou quatre gorges de filet,
et les zones (11, 12) du logement de vis (14) étant placées sur des étriers de retenue (18) élastiques vers l'intérieur, qui sont assemblés l'un avec l'autre dans une zone d'assemblage (28) éloignée du logement de vis (14) et qui sont façonnés de telle sorte qu'une pièce à usiner destinée à être assemblée ou fixée au moyen de l'écrou (8) ou une extrémité (5) d'un collier de serrage (1) puisse être entourée par l'extérieur de telle sorte que les zones (11, 12) du logement de vis (14) puisse être poussées en éloignement l'une de l'autre, le diamètre du taraudage de l'écrou (8) pouvant s'agrandir lors d'une pression radiale générée par le filetage et / ou le taraudage, suffisamment pour que le maintien axial entre l'écrou (8) et la vis (9) ne soit plus donné temporairement,
**caractérisé**
**en ce que** sur les zones (11, 12) du logement de vis (14) et / ou sur les étriers de retenue (18), sur les deux côtés de la fente (S) est placé chaque fois un élément d'ouverture (22), qui sont conçus chacun sous la forme d'une barrette plate, la hauteur des éléments d'ouverture (22) considérée dans la direction de l'axe longitudinal d'une vis (9) correspondant à la hauteur des zones (11, 12) du logement de vis (14), et entre les éléments d'ouverture (22) étant conçu un interstice (24), qui en rapport au logement de vis (14), s'élargit vers l'extérieur dans la direction radiale.

2. Écrou (8) selon la revendication 1, **caractérisé en ce que** les éléments d'ouverture (22) sont surmoulés en monobloc sur chaque fois une zone (11, 12) du logement de vis (14).

3. Écrou (8) selon la revendication 1 ou 2, **caractérisé en ce que** les éléments d'ouverture (22) sont surmoulés en monobloc sur chaque fois un étrier de retenue (18) des zones (11, 12) du logement de vis (14).

4. Écrou (8) selon l'une quelconque des revendications précédentes, **caractérisé en ce qu'**une zone des éléments d'ouverture (22) éloignée du logement de vis (14) saillit latéralement par-dessus les étriers de retenue (18).

5. Écrou (8) selon l'une quelconque des revendications précédentes, **caractérisé en ce que** l'interstice (24) est délimité au moins partiellement par des zones (23) rectilignes des éléments d'ouverture (22).

6. Écrou (8) selon la revendication 5, **caractérisé en ce que** les zones (23) rectilignes des éléments d'ouverture (22) incluent entre elles un angle qui se situe entre 30° et 120°, de préférence entre 45° et 100° et particulièrement entre 60° et 90°.

7. Écrou (8) selon l'une quelconque des revendications précédentes, **caractérisé en ce que** l'interstice (24) est délimité au moins partiellement par des zones recourbées des éléments d'ouverture (22).

8. Écrou (8) selon l'une quelconque des revendications précédentes, **caractérisé en ce que** les éléments d'ouverture (22) conçus sous la forme d'une barrette plate sont adjacents l'un à l'autre chaque fois dans une partie avoisinant les zones (11, 12) du logement de vis (14), l'interstice (24) conçu entre les éléments d'ouverture (22) et s'élargissant vers l'extérieur en direction radiale étant conçu à l'extérieur desdites parties.

9. Collier de serrage (1) pourvu d'un écrou (8) et d'un corps (2) de collier de serrage, qui comporte deux brides de serrage (4, 5) débordant vers l'extérieur approximativement en direction radiale, lesquelles peuvent être contraintes l'une vers l'autre par une vis de serrage (9) insérable dans l'écrou (8),
**caractérisé en ce que** l'écrou (8) du collier de serrage (1) comporte les caractéristiques de l'une quelconque des revendications 1 à 8.
